(19) Europäisches Patentamt
European Patent Office
Office européen des brevets

(11) **EP 2 051 456 B1**

(12) **EUROPEAN PATENT SPECIFICATION**

(45) Date of publication and mention
of the grant of the patent:
**09.12.2009 Bulletin 2009/50**

(51) Int Cl.:
***H04L 12/56*** *(2006.01)*

(21) Application number: **07291276.9**

(22) Date of filing: **18.10.2007**

(54) **Method for routing data from inlet stages to outlet stages of a node of a communications network**

Verfahren zum Routing von Daten von Eingangsebenen zu Ausgangsebenen eines Knotens eines Kommunikationsnetzwerks

Procédé de routage de données dans des étapes d'entrée vers les étapes de sortie d'un noeud du réseau de communications

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**22.04.2009 Bulletin 2009/17**

(73) Proprietor: **Alcatel Lucent**
**75008 Paris (FR)**

(72) Inventors:
• **Popa, Daniel**
**92240 Malakoff (FR)**
• **Noirie, Ludovic**
**91620 Nozay (FR)**
• **Post, Georg**
**92620 La ville du Bois (FR)**

(74) Representative: **Schmidt, Werner Karl**
**Alcatel Lucent**
**Intellectual Property & Corporate Standards**
**Lorenzstrasse 10**
**70435 Stuttgart (DE)**

(56) References cited:
**WO-A-00/38376        US-A1- 2002 110 135**
**US-B1- 6 396 843**

**Description**

Background of the Invention

The invention relates to a method for routing data from parallel inlet stages to parallel outlet stages of a node of a communications network, wherein a plurality of parallel data combiners are connected each to a group of the Inlet stages, and wherein a plurality of parallel data distributors are connected each to a group of the outlet stages, the combiners and the distributors being connected to a central stage. The invention further relates to a scheduling device for a node for a communications network, to a node for a communications network, and to a communications network.

The invention relates to the field of very high data rate communications networks, and more precisely, to scheduling devices used in nodes of such networks for the purpose of routing data packets to their respective destinations.

Such nodes may comprise a single central switching device having line cards as inlet and as outlet stages, it being possible for such line cards to offer data rates (bandwidths) of 10 gigabits per second (Gbps) or above. In order to achieve very high routing rates of 10 terabits per second (Tbps) or more, as required in today's communications networks, a number of 1000 parallel line cards at the input and at the output of the central switching device is required.

A scheduling unit for such a multi-terabit packet switch can be based on a single scheduling entity, which matches the bandwidths of all inlet to all outlet stages using a scheduling matrix with a granularity of an integer numbers of cells. The number of allowed cells per scheduling cycle is equal to the capacity of the inlet/outlet stages. In this approach, the hardware scalability of the scheduling becomes difficult when the system capacity is larger than 2 Tbps (more than -256 inlet/outlet stages), as both the size of silicon chips and the time of convergence grow rapidly with the number of line-cards. For capacities larger than 2 Tbps, such a scheduling solution can hardly be implemented efficiently.

For this reason, when a very large number of line cards are to be interconnected, it is preferable to use a multi-stage architecture made up, for example, of three switching stages: a first stage comprising the inlet/outlet stages, a second stage comprising the combiners/distributors being typically implemented as multiplexers/demultiplexers, and a third, central stage connecting the combiners to the distributors. Such an architecture is described e.g. in the document entitled "Cisco carrier routing system" accessible at the internet address: "www.cisco.com/en/US/products/ps5763/index.html".

The scheduler used for this architecture does not use matrix scheduling, compensating the lack of efficiency by an additional transfer bandwidth (more than 10 %), also referred to as over-speed in the following, and uses high speed-up, i.e. adding a very large switching capacity (of about 240 %) in order to prevent bottlenecks. Moreover, the scheduler requires re-ordering of groups of routed data upstream of the outlet stages, thereby significantly increasing its complexity.

In other scalable multi-stage network nodes, the switch fabric can be a set of un-buffered or buffered crossbars. In the un-buffered ones, each matrix must run a very fast cell-by-cell scheduler to solve the contention. However, synchronization of many-stage transfers is a problem in this case. In buffered crossbars, the matrix contention can be solved using flow controls on any link (with a Clos-type interconnection of crossbar matrices). However, cells arriving out of order on the destination card must be re-sequenced. Also, very high numbers of FIFO memories are needed to keep all flows independent. In all these cases, a large amount of matrix over-speed (a factor of 2 or more) is typically used.

Further prior art solutions are disclosed in documents: WO 00/38 376, US 2002/0 110 135 and US 6 396 843.

Object of the Invention

It is the object of the invention to provide: a method for routing data from inlet to outlet stages of a node of a communications network, a scheduling device, a node comprising such a scheduling device, and a communications network with at least one such node, all of which allowing for simultaneous scheduling of data flows with different granularities.

Summary of the Invention

This object is achieved by a method as described in the introduction, comprising the steps of: a) matching the input bandwidth of each of the combiners to the output bandwidth of each of the distributors; b1) for each combiner, matching the input bandwidth of each inlet stage of the group of inlet stages to the output bandwidth of the plurality of distributors using the result of the bandwidth matching of step a) as a constraint; b2) for each distributor, matching the output bandwidth of each outlet stage of the group of outlet stages to the input bandwidth of the plurality of combiners using the result of the bandwidth matching of step a) as a constraint; and c) for each pair of combiners and distributors, matching the input bandwidth of each inlet stage of the group of inlet stages to the output bandwidth of each outlet stage of the group of outlet stages using the result of the bandwidth matching of steps b1) and b2) as a contraint.

The main idea behind the scheduling solution described above is to decompose the matrix scheduling, corresponding to all inlet and outlet stages, into a combination of parallel and serial scheduling steps performed in corresponding switching entities (computing modules), with overall and/or partial views on the switching matrix. The implementation proposed above uses a hierarchy of $(N+1)^2$ logical computing modules, organized on three levels/layers. $N$ represents the number of combiners/distributors (multiplexers/demultiplexers) in the system. There are at least three layers, forming a hierarchy. From the top to the bottom of the hierarchy, in each step, input to output bandwidth is matched, the result of the previous step being used as a constraint for the subsequent step(s), thus matching input to output bandwidths from large to small granularities in a hierarchical matrix scheduling scheme.

The proposed scheduling solution saves important over-speed between inlet and outlet stages (compared to the solutions known in the state of the art) and achieves good performance. Moreover, the latency of scheduling the matrix is considerably lower than for non-hierarchical matrix scheduling schemes. The person skilled in the art will appreciate that the hierarchical scheme, as defined

here, can be further extended to other packet (and time-slotted) switching systems, comprising more than three layers and is well adapted to the flow switching concept, in the context of multi-stage switch architectures, as defined e.g. in EP 1 833 212 A1. The referenced document describes the concept of flow switching (i.e., Multiplexers, Demultiplexers, line-card and inlet-/outlet-stages, respectively) as well as the logical organization of flows from small to large granularities.

In a preferred variant, in at least one of steps a) to c), for calculating a finally-granted bandwidth of an actual scheduling cycle, bandwidth matching is performed taking into account both a pre-final granted bandwidth and a finally-granted bandwidth of a previous scheduling cycle, and a pre-granted bandwidth of the actual scheduling cycle between each of the inlet stages of each of the combiners and each of the outlet stages of each of the distributors. In such a way, the deviation between the pre-final granted and the finally-granted bandwidth of a previous scheduling cycle can be taken into account for improving the bandwidth matching of the current scheduling cycle. As a result of the bandwidth matching, a new finally granted bandwidth is calculated between each of the inlet stages of each of the combiners and each of the outlet stages of each of the distributors.

In a preferred variant, in steps a) to c) bandwidth matching is performed by synchronizing the signaling exchange of a pre-granted bandwidth, of a pre-final granted bandwidth and of a finally-granted bandwidth using a common clock signal. In such a way, the information about the pre-granted, the pre-final granted and the finally-granted bandwidth is made available in a synchronized manner during each scheduling cycle.

A further aspect of the invention is implemented in a scheduling device for a node of a communications network, the scheduling device comprising: a first scheduling unit for matching the input bandwidth of each of a plurality of parallel data combiners of the node to each of a plurality of parallel data distributors of the node; for each combiner being connected to a group of inlet stages, a second scheduling unit for matching the input bandwidth of each inlet stage of the group of inlet stages to the output bandwidth of the plurality of distributors based on the bandwidth matching of the first scheduling unit; for each distributor being connected to a group of outlet stages, a further second scheduling unit for matching the output bandwidth of each outlet stage of the group of outlet stages to the input bandwidth of the plurality of combiners based on the bandwidth matching of the first scheduling unit; and for each combination of combiners and distributors, a third scheduling unit for matching the input bandwidth of each inlet stage of the group of inlet stages to the output bandwidth of each outlet stage of the group of outlet stages based on the bandwidth matching of the second and the further second scheduling units. The scheduling device may be implemented as hardware, such as an ASIC or FPGA, or as a dedicated software which is implemented on a computer system suitable for this purpose.

Using a scheduling device as described above, hierarchical scheduling of a node of a communications network having three layers (central stage, combiners/distributors, inlet/outlet stages) can be performed. It is understood that the node may also comprise more than three layers, i.e. each inlet/outlet stage may itself serve as a further combiner/distributor, and that also in this case, the scheduling device may be enhanced in a way apparent to the person skilled in the art for performing hierarchical scheduling.

In the following, the term "granularity" will be used to define the minimal quantity of data, multiples of which can be allocated by the scheduling units. These granularities will be arbitrarily called: super-chunk, for the first scheduling unit, mid-chunk, for the second scheduling units, dual mid-chunk for the further second scheduling units, and chunk for the third scheduling units. Preferably, the constraint on the sizes is: super-chunk >= (dual) mid-chunk >= chunk.

In a preferred embodiment, for calculating a finally-granted bandwidth of an actual scheduling cycle, at least one of the first, the second, the further second and the third scheduling units is designed to perform bandwidth matching taking into account both a pre-final granted bandwidth and a finally-granted bandwidth of a previous scheduling cycle, and a pre-granted bandwidth of the current cycle, between each of the inlet stages of each of the combiners and each of the outlet stages of each of the distributors. As described above, the deviation between the pre-final granted and the finally-granted bandwidth matrix of one or more previous cycles can be taken into account for the bandwidth matching of the scheduling units. The result of the bandwidth matching is a new set of finally granted bandwidths between each of the inlet stages of each of the combiners and each of the outlet stages of each of the distributors.

In a highly preferred embodiment, the scheduling units are designed to perform bandwidth matching by synchronizing the signaling exchange of a pre-granted bandwidth, of a pre-final granted bandwidth and of a finally-granted bandwidth using a common clock signal, thus allowing, for each level within the hierarchy, to use the feedback and feed-forward signals for improving the bandwidth matching.

In yet another preferred embodiment, the scheduling device further comprises an input scheduler designed to generate a bandwidth request matrix and an output scheduler being designed to calculate the pre-granted bandwidth from the bandwidth request matrix. The bandwidth request matrix comprises a number of rows (columns) corresponding to the number of parallel combiners/distributors times the number of inlet (outlet)stages connected to each combiner (distributor). The input scheduler collects the bandwidth requests from the inlet stages and sends them to the output scheduler at the outlet stages which in turn generates a pre-granted bandwidth matrix based on the request, the pre-granted bandwidth matrix being used as the basis for the bandwidth matching of the scheduling units.

A further aspect of the invention is implemented in a node for a communications network, comprising: a plurality of data combiners, each connected to a group of parallel inlet stages, a plurality of data distributors, each connected to a group of parallel outlet stages, a central stage connected to the plurality of combiners and distributors, and a scheduling device as described above. The node has a hierarchical architecture with three levels, thus being ideally adapted for the hierarchical scheduling performed by the scheduling device described above.

In a preferred embodiment, the data combiners are multiplexers for multiplexing the data from the group of inlet stages, and the data distributors are demultiplexers for demultiplexing the data to the group of outlet stages. The use of multiplexers/demultiplexers for combining/distributing data (packets) is common in today's nodes of communications networks. In the context of the present application, the term combiner/distributor is considered as a general designation of all types of devices for combining/distributing data. Thus, combiners and distributors may operate on different units of data, such as bytes, constant-size cells of typically 64 bytes, variable-size packets, aggregates of packets or of cells, or fixed or variable-size bursts of packets.

A further aspect is implemented in a communications network comprising at least one node as described above. In such a network being implemented e.g. as a packet-switched network using internet Protocol (IP) packets, Ethernet frames or the like, a plurality of nodes of the type above may be provided for routing the data at a routing rate of several terabits per second (Tbps).

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Drawings

Exemplary embodiments are shown in the diagrammatic drawing and are explained in the description below. The following are shown:

Fig.1 a schematic diagram of an embodiment of a scheduling device according to the invention, and

Figs. 2a,b two schematic diagrams of an embodiment of a node for a communications network according to the invention, each with two different scheduling units of the scheduling device of Fig. 1.

Detailed Description of Preferred Embodiments

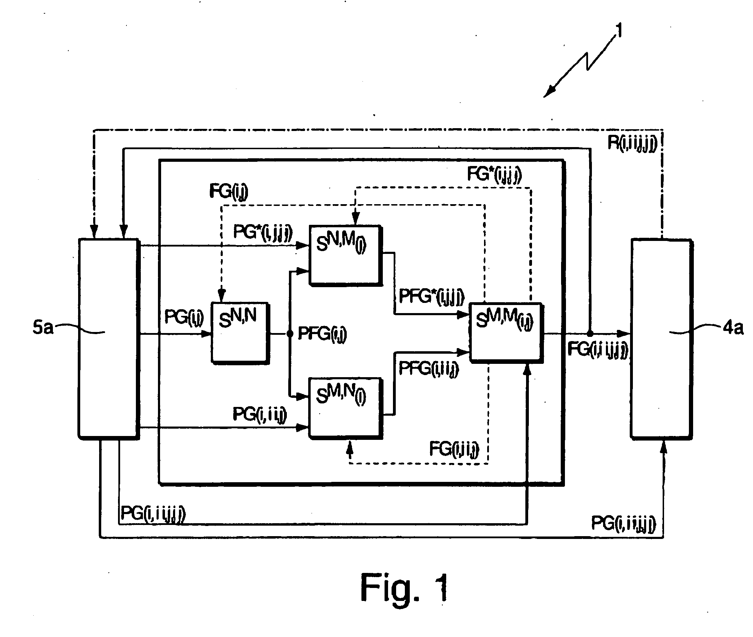

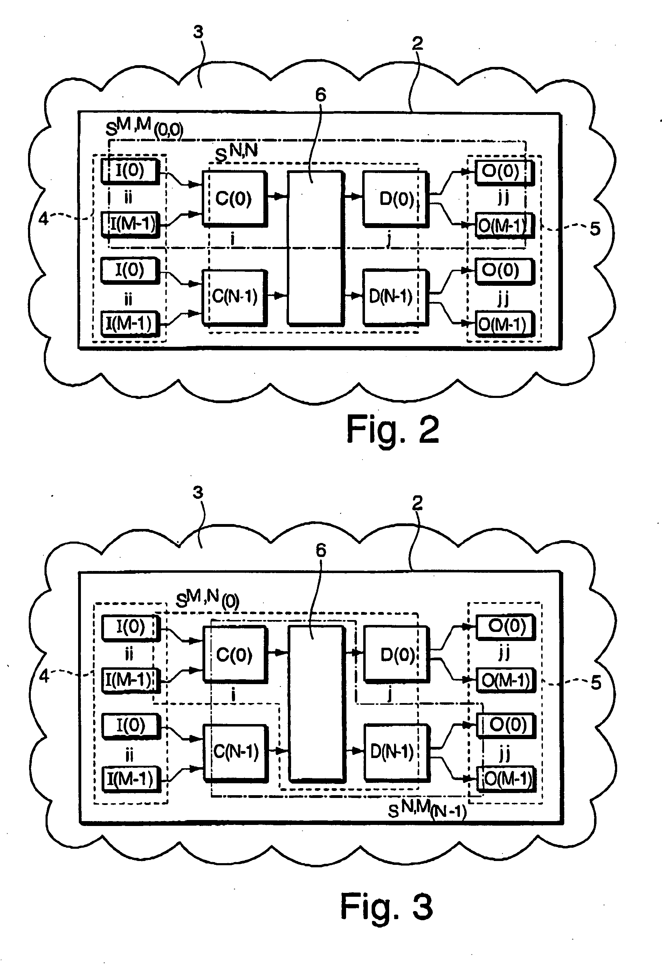

Fig. 1 shows a scheduling device 1 for a node 2 of a communications network 3 shown in Figs. 2 and 3. In the following, the structure of the node 2 will be described in greater detail for a better understanding of the scheduling device represented in Fig. 1.

The node 2 comprises an input 4 with a number of line cards arranged in parallel, each line card being used as one of a group of M inlet stages I(ii) (ii = 0, ..., M-1) which are connected to a respective combiner C(i) in form of a multiplexer, only the first I(0) and the last I(M-1) inlet stage of each group being represented in Figs. 2 and 3. A plurality of N such combiners C(i) (i=0, ..., N-1), are arranged in parallel, only the first combiner C(0) and the last combiner C(N-1) of each group being represented in Figs. 2 and 3. Each combiner C(i) is also connected to a central stage 6 (central switch matrix) which is further connected to a number N of distributors D(j) (j=0, ..., N-1) in form of demultiplexers, only two of which (D(0), D(N-1)) are shown, each distributor D(j) being connected to a respective number M of parallel outlet stages O(jj) (jj=0, ..., M-1) of an output 5 of the node 2. Thus, the node 2 has a hierarchical structure with three levels, namely the inlet/outlet stages I(ii), O(jj), the combiners C(i)/distributors D(j), and the central stage 6.

In the arrangement shown in Figs. 2 and 3, signaling information within a cycle of scheduling can be represented as a matrix of M · N × N · M elements, wherein M represents the number of inlet/outlet stages I(ii), O(jj) and N represents the number of parallel data combiners/distributors C(i), D(j), respectively. For the scheduling of the data from the inlet stages I(ii) to the outlet stages O(jj), a hierarchical approach is used, as will be described in the following with respect to Fig. 1 representing the scheduling device 1 for the node 2 of Figs. 2 and 3.

First, an input scheduler **4a** determines the bandwidth requests of the inlet stages I(0) to I(M-1) of each combiner C(i) at the input 4 of the node 2 and collects them in a request matrix **R(i,ii,jjj)** {ii,jj = 0, ..., **M-1**; i,j = 0, ..., N-1} which is sent to an output scheduler **5a** which communicates with the outlet stages O(jj) at the output 4. The output scheduler provides a pre-granted bandwidth matrix **PG(i,ii,jj)** which is sent back to the inlet stages I(ii) of the input scheduler **4a.**

For the matrix scheduling during each scheduling cycle, a hierarchical approach is used for transforming the pre-granted bandwidth matrix PG(i,ii,j,jj) of the output scheduler 5a to a finally-granted bandwidth matrix **FG(i,ii,j,jj)** which is then provided to the input scheduler 4a and to the output scheduler 5a. In the first (top) level of the hierarchy, a first scheduling unit **S$^{N,N}$** matches the bandwidth between each combiner C(i) and each distributor D(j) by forming an aggregated matrix PG(i,j) from the pre-granted bandwidth matrix PG(i,ii,j,jj) as follows:

$$PG(i, j) = \sum_{ii=0}^{M-1}\sum_{jj=0}^{M-1} PG(i, ii, j, jj)$$

The first scheduling unit S$^{N,N}$ uses a heuristic algorithm for bandwidth matching and provides a first pre-final-granted bandwidth matrix **PFG(i,j),** based on entries from the aggregated bandwidth matrix PG(i,j). Each entry of the first pre-final-granted bandwidth matrix PFG(i,j) represents the bandwidth (e.g. the number of cells) that combiner C(i) is able to send, and has not yet sent, to distributor D(j). Thus, the first scheduling unit S$^{N,N}$ has a macroscopic view on the entire switching matrix at super-chunk level, matching all input to all output bandwidth and provides for the entire switching matrix at the aggregated level of the combiners C(i) / distributors D(j), the impact of the first scheduling unit S$^{N,N}$ on the node 2 being shown in Fig. 2.

The pre-final-granted bandwidth matrix PFG(i,j) is then transferred to the second level of scheduling which comprises a number N of parallel second scheduling units **S$^{N,M}$(j)** as well as a number N of parallel further second scheduling units **S$^{M,N}$(i).**

Each of the second scheduling units S$^{M,N}$(i) matches only part of the bandwidth, namely the bandwidth corresponding to all M inlet stages belonging to a given combiner C(i) to the bandwidth corresponding to all N distributors D (j), j=0,... , N, as shown in Fig. 3 for the second scheduling unit S$^{M,N}$(0) corresponding to the first combiner C(0).

For the purpose of bandwidth matching, an aggregated matrix PG(i,ii,j) is computed from the pre-granted bandwidth matrix PG(i,ii,j.jj) as follows:

$$PG(i, ii, j) = \sum_{jj=0}^{M-1} PG(i, ii, j, jj)$$

The aggregated matrix PG(i,ii,j) is then used in each scheduler S$^{M,N}$(i) (operateing in parallel) in a heuristic algorithm which provides bandwidth matching resulting in a second pre-final bandwidth matrix **PFG(i,ii,j),** using the first pre-final-granted bandwidth matrix PFG(i,j) from the first scheduling unit S$^{N,N}$ as a constraint, i.e. the total bandwidth between the combiner C(i) and each of the distributors D(j) does not exceed the corresponding entry of the first pre-final granted bandwidth matrix PFG(i,j), according to the following constraint equation:

$$\sum_{ii=0}^{M-1} PFG(i, ii, j) \le PFG(i, j), \ for \ all \ (i, j)$$

Each entry of the second pre-final bandwidth matrix PFG(i,ii,j) represents the bandwidth (e.g., the number of cells) that the inlet stage I(ii) of combiner C(i) can send, and has not yet sent, to the distributor D(j), this level of granularity also being referred to as mid-chunk level.

In a similar way, the second further scheduling units S$^{N,M}$(j) match only a part of the bandwidth of all M outlet stages O(ij) belonging to a given distributor D(j) to the bandwidth corresponding to all N combiners C(i), j=0,..., N-1, as shown in Fig. 3 for the example of the further scheduling unit S$^{N,M}$(N-1) belonging to the last distributor D(N-1).

In each further scheduling unit S$^{N,M}$(j), an aggregated matrix PG*(i,j,jj) (dual of the aggregated matrix PG(i,ii,j) of the scheduling units $S^{M,N}(i)$) is computed from PG(i,ii,j,jj), as follows

$$PG^*(i,j,jj) = \sum_{ii=0}^{M-1} PG(i,ii,j,jj)$$

Each scheduling unit $S^{N,M}(j)$ uses a heuristic algorithm for the bandwidth matching and provides a further second pre-final bandwidth matrix PFG*(i,j,jj), based on entries from the aggregated matrix PG*(i,j,jj). Each entry of the further second pre-final bandwidth matrix PFG*(i,j,jj) represents the bandwidth (e.g., number of cells) that combiner C(i) can send, and has not yet sent, to the outlet stage O(jj) of distributor D(j), this level of granularity also being referred to as dual mid-chunk level. It is understood that also the further second scheduling units $S^{M,N}(j)$ use the first pre-final-granted bandwidth matrix PFG(i,j) as a constraint for performing the bandwidth matching according to the constraint equation:

$$\sum_{jj=0}^{M-1} PFG^*(i,j,jj) \leq PFG(i,j), \text{ for all } (i,j)$$

Each of the second scheduling units $S^{M,N}(i)$ and each of the further second scheduling units $S^{N,M}(j)$ transfer the second and the further second pre-final granted bandwidth matrix PFG(i,ii,j) and PFG*(i,j,jj), respectively, to the next (third) level of arbitration, comprising a number of N times N third scheduling units $\mathbf{S^{M,M}(i,j)}$ (i, j = 0,.... N-1) operated in parallel. Each of the third scheduling units $S^{M,M}(i,j)$ matches the bandwidth of each inlet stage I(ii) of a specific combiner C(i) to the bandwidth of each outlet stage O(jj) of a specific distributor D(j), as shown in Fig. 2 for the example of the third scheduling unit $S^{M,M}(0,0)$ of the first combiner C(0) and the first distributor D(0), this scheduling level also being referred to as chunk level.

Each scheduler $S^{M,M}(i,j)$ uses the pre-granted bandwidth matrix PG(i,ii,j,jj) as received from the output scheduler 5a and uses a heuristic algorithm for bandwidth matching, providing a finally-granted bandwidth matrix FG(i,ii,j,jj) based on the entries of the pre-granted bandwidth matrix PG(i,ii,j,jj) and using the second and the further second pre-final granted bandwidth matrix PFG(i,ii,j) and PFG*(i,j,jj) as constraints, according to the following constraint equations:

$$\sum_{ii=0}^{M-1} FG(i,ii,j,jj) \leq PFG^*(i,j,jj), \text{ for all } (i,j,jj)$$

and

$$\sum_{jj=0}^{M-1} FG(i,ii,j,jj) \leq PFG(i,ii,j), \text{ for all } (i,ii,j)$$

Finally, each of the third schedulers $S^{M,M}(i,j)$ sends the finally-granted bandwidth matrix FG(i,ii,j,jj) simultaneously to the input scheduler 4a and to the output scheduler 5a.

As the scheduling units do not exchange other than the above mentioned signals, the total bandwidth granted by the first scheduling unit $S^{N,N}$ may differ from the total bandwidth granted by the number N of second scheduling units $S^{M,N}(i)$ and from the bandwidth granted by the N further second scheduling units $S^{N,M}(j)$, as well as from the total bandwidth granted by the N times N third scheduling units $S^{M,M}(i,j)$. Therefore, although the scheduling approach as described above may already be sufficient to produce satisfactory results, it is preferred when each of the third scheduling units $S^{M,M}(i,j)$ sends feedback information, concerning the final granted bandwidth between the pairs of inlet and outlet line-cards it handles to its upstream partners, which use this information in the following way:

The finally-granted bandwidth matrix FG(i,ii,j,jj) of a previous scheduling cycle is used by the first scheduling unit $S^{N,N}$ to calculate an aggregated finally-granted bandwidth matrix FG(i,j) as follows:

$$FG(i,j) = \sum_{ii=0}^{M-1}\sum_{jj=0}^{M-1} FG(i,ii,j,jj)$$

The aggregated finally-granted bandwidth matrix FG(i,j) of the previous scheduling cycle is then compared to the aggregate pre-final granted bandwidth matrix PFG(i,j) of the previous scheduling cycle calculated in the first scheduling unit $S^{N,N}$ in the way described above and the difference DIF(i,j) = PFG(i,j) - FG(i,j) is taken into account for the bandwidth matching of the actual cycle of scheduling.

In a similar way, each second scheduling unit $S^{M,N}(i)$ uses the finally-granted bandwidth FG(i,ii,jj) of a previous scheduling cycle and computes an aggregated finally granted bandwidth matrix FG(i,ii,j) as follows:

$$FG(i,ii,j) = \sum_{jj=0}^{M-1} FG(i,ii,j,jj)$$

The aggregate finally-granted bandwidth matrix FG(i,ii,j) is then compared to the aggregated pre-final granted bandwidth matrix PG(i,ii,j) of the previous scheduling cycle; the difference DIF(i,ii,j) = PFG(i,ii,j) - FG(i,ii,j) is then taken into account in the heuristic algorithm for the bandwidth matching of the actual cycle of scheduling.

Furthermore, each of the further second scheduling units $S^{N,M}(j)$ uses the finally-granted bandwidth matrix FG(i,ii,j,jj) of the previous scheduling cycle and computes a dual aggregated finally-granted bandwidth matrix FG*(i,j,jj) as follows:

$$FG*(i,j,jj) = \sum_{ii=0}^{M-1} FG(i,ii,j,jj)$$

The dual aggregated finally-granted bandwidth matrix FG*(i,j,jj) is then compared to the dual aggregated pre-final granted matrix PFG*(i,j,jj) of the previous scheduling cycle, calculated as described above, the difference DIF*(i,j, b) = PFG*(i,j,jj) - FG*(i,j,jj) being also taken into account in the heuristic algorithm during the actual cycle of scheduling.

By using the feedback information in the way described above, the performance of the matrix scheduling can be improved. The provision of the feed-forward information, i.e. of the pre-granted bandwidth matrix PG(i,ii,j,jj) of the actual scheduling cycle, as well as the provision of the feedback information, i.e. of the finally-granted bandwidth matrix FG(i,ii j,jj) of the previous scheduling cycle, can be synchronized by using a common clock signal. It is understood that although in Fig. 1 the aggregate equivalents of the pre-granted bandwidth matrix PG(i,ii,j,jj) and the finally-granted bandwidth matrix FG(i,ii,j,jj) are represented for the sake of simplicity, the aggregation can also be performed in the corresponding first, second and further second scheduling units $S^{N,N}$, $S^{M,N}(i)$, and $S^{N,M}(j)$, and that the pre-granted bandwidth matrix PG(i,ii,j,jj) and the finally-granted bandwidth matrix FG(i,ii,j,jj) can be exchanged between the respective scheduling units.

In summary, the hierarchical scheduling device 1 used in the multi-level node 2 is able to schedule simultaneously data flows with different granularities, the smallest granularity corresponding to the capacity of a line-card (inlet/ outlet stage), the largest capacity representing the aggregation of several line-cards. Therefore, for the hierarchical matrix scheduling solution as described above, no re-sequencing and no cell-by-cell arbitration is required. If the efficiency of matrix arbitration is high enough, the node 2 can run with a modest matrix over-speed. Moreover, if the arbitration scheme is hierarchical, it can be pipelined and run much faster than a single-block scheduler whose runtime scales as a power of the number of inlet/outlet stages (i.e., N x M). For large systems, the algorithm runtimes are considerably lower than in an equivalent non-hierarchical scheduling scheme. The person skilled in the art will appreciate that the above hierarchical scheme may easily be adapted to multi-stage nodes having more than three levels, thus allowing using the inventive concept in a large variety of applications.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the scope of the invention, as defined by the appended claims, and equivalents thereof.

**Claims**

1.  Method for routing data from parallel inlet stages (I(0) to I(M-1)) to parallel outlet stages (O(0) to O(M-1)) of a node (2) of a communications network (3), wherein a plurality of parallel data combiners (C(O) to C(N-1)) are connected each to a group of the inlet stages (I(0) to I(M-1)), and wherein a plurality of parallel data distributors (D(0) to D(N-1)) are connected each to a group of the outlet stages (O(0) to O(M-1)), the combiners (C(0) to C(N-1)) and the distributors (D(0) to D(N-1)) being connected to a central stage (6), the method comprising the steps of:

    a) matching the input bandwidth of each of the combiners (C(0) to C(N-1)) to the output bandwidth of each of the distributors (D(0) to D(N-1)),
    b1 ) for each combiner (C(0) to C(N-1)), matching the input bandwidth of each inlet stage (I(0) to I(M-1)) of the group of inlet stages (I(0) to I(M-1)) to the output bandwidth of the plurality of distributors (D(0) to D(N-1)) using the result of the bandwidth matching of step a) as a constraint,
    b2) for each distributor (D(0) to D(N-1)), matching the output bandwidth of each outlet stage (O(0) to O(M-1)) of the group of outlet stages (O(0) to O(M-1)) to the input bandwidth of the plurality of combiners (C(0) to C(N-1)) using the result of the bandwidth matching of step a) as a constraint, and
    c) for each pair of combiners (C(0) to C(N-1)) and distributors (D(0) to D(N-1)), matching the input bandwidth of each inlet stage (I(0) to I(M-1)) of the group of inlet stages (I(0) to I(M-1)) to the output bandwidth of each outlet stage (O(0) to O(M-1)) of the group of outlet stages (O(0) to O(M-1)) using the result of the bandwidth matching of steps b1) and b2) as a constraint.

2.  Method according to claim 1, wherein in at least one of steps a) to c), for calculating a finally-granted bandwidth (FG(i,ii,j,jj)) of an actual scheduling cycle, bandwidth matching is performed taking into account both a pre-final granted bandwidth (PFG(i,j), PFG(i,ii,j), PFG*(i,j,jj)) and a finally-granted bandwidth (FG(i,j), FG(i,ii,j), FG*(i,j,jj)) of a previous scheduling cycle, and a pre-granted bandwidth (PG(i,ii,j,jj)) of the actual scheduling cycle between each of the inlet stages (I(0) to I(M-1)) of each of the combiners (C(0) to C(N-1)) and each of the outlet stages (O(0) to O(M-1)) of each of the distributors (D(0) to D(N-1)).

3.  Method according to claim 1, wherein in steps a) to c) bandwidth matching is performed by synchronizing the signaling exchange of a pre-granted bandwidth (PG(i,ii,j,jj)), a pre-final granted bandwidth (PFG(i,j), PFG(i,ii,j), PFG*(i,j,jj)) and of a finally-granted bandwidth (FG(i,ii,j,jj)) using a common clock signal.

4.  Scheduling device (1) for a node (2) of a communications network (3), the scheduling device comprising:

    a first scheduling unit ($S^{N,N}$) for matching the input bandwidth of each of a plurality of parallel data combiners (C(0) to C(N-1)) of the node (2) to each of a plurality of parallel data distributors (D(0) to D(N-1)) of the node (2), for each combiner (C(0) to C(N-1)) being connected to a group of inlet stages (I(0) to I(M-1)), a second scheduling unit ($S^{M,N}(i)$) for matching the input bandwidth of each inlet stage (I(0) to I(M-1)) of the group of inlet stages (I(0) to I(M-1)) to the output bandwidth of the plurality of distributors (D(0) to D(N-1)) using the result of the bandwidth matching of the first scheduling unit ($S^{N,N}$) as a constraint, for each distributor (D(0) to D(N-1)) being connected to a group of outlet stages (O(0) to O(M-1)), a further second scheduling unit ($S^{N,M}(j)$) for matching the output bandwidth of each outlet stage (O(0) to O(N-1)) of the group of outlet stages (O(0) to O(N-1)) to the input bandwidth of the plurality of combiners (C(0) to C(N-1)) using the result of the bandwidth matching of the first scheduling unit ($S^{N,N}$) as a constraint, and for each pair of combiners (C(0) to C(N-1)) and distributors (D(0) to D(N-1)), a third scheduling unit ($S^{M,M}(i,j)$) for matching the input bandwidth of each inlet stage (I(0) to I(M-1)) of the group of inlet stages (I(0) to I(M-1)) to the output bandwidth of each outlet stage (O(0) to O(M-1)) of the group of outlet stages (O(0) to O(M-1)) using the results of the bandwidth matching of the second and the further second scheduling units ($S^{M,N}(i)$ $S^{N,M}(j)$) as a constraint.

5.  Scheduling device according to claim 4, wherein for calculating a finally-granted bandwidth (FG(i,ii,j,jj)) of an actual scheduling cycle, at least one of the first, the second, the further second and the third scheduling units ($S^{N,N}$, $S^{M,N}(i)$, $S^{N,M}(j)$, $S^{M,M}(i,j)$) is designed to perform bandwidth matching taking into account both a pre-final granted bandwidth (PFG(i,j,), PFG(i,ii,j), PFG*(i,j,jj)) and a finally-granted bandwidth (FG(i,j), FG(i,ii,j), FG*(i,j,jj)) of a previous scheduling cycle, and a pre-granted bandwidth (PG(i,ii,j,jj)) of the actual scheduling cycle between each of the inlet stages (I(0) to I(M-1)) of each of the combiners (C(0) to C(N-1)) and each of the outlet stages (O(0) to O(M-1)) of each of the distributors (D(0) to D(N-1)).

6. Scheduling device according to claim 4, wherein the scheduling units ($S^{N,N}$, $S^{M,N}(i)$, $S^{N,M}(j)$, $S^{M,M}(i,j)$) are designed to perform bandwidth matching by synchronizing the signaling exchange of a pre-granted bandwidth ($PG(i,ii,j,jj)$), a pre-final granted bandwidth ($PFG(i,j)$, $PFG(i,ii,j)$, $PFG^*(i,j,jj)$) and of a finally-granted bandwidth ($FG(i,ii,j,jj)$) using a common clock signal.

7. Scheduling device according to claim 4, further comprising an input scheduler (4a) designed to generate a bandwidth request matrix ($R(i,ii,j,jj)$) and an output scheduler (5b) being designed to calculate the pre-granted bandwidth ($PG(i,ii,j,jj)$) from the bandwidth request matrix ($R(i,ii,j,jj)$).

8. Node (2) for a communications network, comprising:

   a plurality of data combiners (C(0) to C(N-1)), each connected to a group of parallel inlet stages (I(0) to I(M-1)),
   a plurality of data distributors (D(0) to D(N-1)), each connected to a group of parallel outlet stages (O(0) to O(M-1)),
   a central stage (6) connected to the plurality of combiners (C(0) to C(N-1)) and distributors (D(0) to D(N-1)), and
   a scheduling device (1) according to claim 4.

9. Node according to claim 8, wherein the data combiners (C(0) to C(N-1)) are multiplexers for multiplexing the data from the group of inlet stages (I(0) to I(M-1)), and wherein the data distributors (D(0) to D(N-1)) are demultiplexers for demultiplexing the data to the group of outlet stages (O(0) to O(M-1)).

10. Communications network (3) comprising at least one node according to claim 8.

**Patentansprüche**

1. Verfahren zum Routing von Daten von parallelen Eingangsebenen (I(0) bis I(M-1)) an parallele Ausgangsebenen (O(0) bis O(M-1)) eines Knotens (2) eines Kommunikationsnetzwerks (3), wobei eine Vielzahl von parallelen Datenverknüpfern (C(0) bis C(N-1)) jeweils mit einer Gruppe der Eingangsebenen (I(0) bis I(M-1 verbunden sind, und wobei eine Vielzahl von parallelen Datenverteilern (D(0) bis D(N-1)) jeweils mit einer Gruppe der Ausgangsebenen (O(0) bis O(M-1)) verbunden sind, wobei die Verknüpfer (C(0) bis C(N-1)) und die Verteiler (D(0) bis D(N-1)) mit einer Zentralebene (6) verbunden sind,
   wobei das Verfahren die folgenden Schritte umfasst:

   a) Anpassen der Eingangsbandbreite eines jeden der Verknüpfer (C(0) bis C(N-1)) an die Ausgangsbandbreite eines jeden der Verteiler (D(0) bis D(N-1)),
   b1) für jeden Verknüpfer (C(0) bis C(N-1)), Anpassen der Eingangsbandbreite einer jeden Eingangsebene (I(0) bis I(M-1)) der Gruppe von Eingangsebenen (I(0) bis I(M-1 an die Ausgangsbandbreite der Vielzahl von Verteilern (D(0) bis D(N-1)) unter Verwendung des Ergebnisses der Bandbreitenanpassung von Schritt a) als eine Vorgabe,
   b2) für jeden Verteiler (D(0) bis D(N-1)), Anpassen der Ausgangsbandbreite einer jeden Ausgangsebene (O(0) bis O(M-1)) der Gruppe von Ausgangsebenen (O(0) bis O(M-1)) an die Eingangsbandbreite der Vielzahl von Verknüpfern (C(0) bis C(N-1)) unter Verwendung des Ergebnisses der Bandbreitenanpassung von Schritt a) als eine Vorgabe, und
   c) für jedes Paar von Verknüpfern (C(0) bis C(N-1)) und Verteilern (D(0) bis D(N-1)), Anpassen der Eingangsbandbreite einer jeden Eingangsebenen (I(0) bis I(M-1)) der Gruppe von Eingangsebenen (I(0) bis I(M-1)) an die Ausgangsbandbreite jeder Ausgangsebene (O(0) bis O(M-1)) der Gruppe von Ausgangsebenen (O(0) bis O(M-1)) unter Verwendung des Ergebnisses der Bandbreitenanpassung der Schritte b1) und b2) als eine Vorgabe.

2. Verfahren nach Anspruch 1, wobei In mindestens einem der Schritte a) bis c), für die Berechnung einer endgültig bewilligten Bandbreite ($FG(i,ii,j,jj)$) eines aktuellen Zeitplanungszyklus, die Bandbreitenanpassung unter Berücksichtigung sowohl einer vorläufig bewilligten Bandbreite ($PFG(i,j)$, $PFG(i,ii,j)$, $PFG^*(i,j,jj)$) als auch einer endgültig bewilligten Bandbreite ($FG(i,j)$, $FG(i,ii,j)$, $FG^*(i,j,jj)$) eines zuvor erfolgten Zeitplanungszyklus, und einer vorausbewilligten Bandbreite ($PG(i,ii,j,jj)$) des aktuellen Zeitplanungszyklus zwischen einer jeden der Eingangsebenen (I(0) bis I(M-1)) eines jeden der Verknüpfter (C(0) bis C(N-1)) und einer jeden der Ausgangsebenen (O(0) bis O(M-1)) eines jeden der Verteiler (D(0) bis D(N-1)) ausgeführt wird.

3. Verfahren nach Anspruch 1, wobei in den Schritten a) bis c) die Bandbreitenanpassung durch Synchronisieren des Signalisierungsaustauschs einer vorausbewilligten Bandbreite (PG(i.ii,j,jj)), einer vorläufig bewilligten Bandbreite (PFG(i,j), PFG(i,ii,j), PFG*(i,j,jj)) und einer endgültig bewilligten Bandbreite FG(i,ii,j,jj) unter Verwendung eines gemeinsamen Taktsignals ausgeführt wird.

4. Zeitplanungsvorrichtung (1) für einen Knoten (2) eines Kommunikationsnetzwerks (3), wobei die Zeitplanungsvorrichtung umfasst:

Eine erste Zeitplanungseinheit ($S^{N,N}$) zum Anpassen der Eingangsbandbreite eines jeden einer Vielzahl von parallelen Datenverknüpfern (C(0) bis C(N-1)) des Knotens (2) an einen jeden einer Vielzahl von parallelen Datenverteilern (D(0) bis D(N-1)) des Knotens (2),
für jeden mit einer Gruppe von Eingangsebenen (I(0) bis I(M-1) verbundenen Verknüpfer (C(0) bis C(N-1)), eine zweite Zeitplanungseinheit ($S^{M,N}$(i)) zum Anpassen der Eingangsbandbreite einer Jeden Eingangsebene (I(0) bis I(M-1) der Gruppe von Eingangsebenen (I(0) bis I(M-1) an die Ausgangsbandbreite der Vielzahl von Verteilern (D(0) bis D(N-1)) unter Verwendung des Ergebnisses der Bandbreitenanpassung der ersten Zeitplanungseinheit ($S^{N,N}$) als eine Vorgabe, für jeden mit einer Gruppe von Ausgangsebenen (O(0) bis O(M-1) verbundenen Verteiler (D(0) bis D(N-1)), eine weitere zweite Zeitplanungseinheit ($S^{N,M}$(j)) zum Anpassen der Ausgangsbandbreite einer jeden Ausgangsebene (O(0) bis O(M-1) der Gruppe von Ausgangsebenen (O(0) bis O(M-1) an die Eingangsbandbreite der Vielzahl von Verknüpfern (C(0) bis C(N-1)) unter Verwendung des Ergebnisses der Bandbreitenanpassung der ersten Zeitplanungseinheit ($S^{N,N}$) als eine Vorgabe, und
für jedes Paar von Verknüpfern (C(0) bis C(N-1)) und Verteilern (D(0) bis D(N-1)), eine dritte Zeitplanungseinheit ($S^{M,M}$(i,j)) zum Anpassen der Eingangsbandbreite einer jeden Eingangsebene (I(0) bis I(M-1)) der Gruppe von Eingangsebenen (I(0) bis I(M-1)) an die Ausgangsbandbreite jeder Ausgangsebene (O(0) bis O(M-1)) der Gruppe von Ausgangsebenen (O(0) bis O(M-1)) unter Verwendung des Ergebnisses der Bandbreitenanpassung der zweiten und der weiteren zweiten Zeitplanungseinheit ($S^{M,N}$(i), ($S^{N,M}$(j)) als eine Vorgabe.

5. Zeitplanungseinheit nach Anspruch 4, wobei für die Berechnung einer endgültig bewilligten Bandbreite (FG(i,ii,j, jj)) eines aktuellen Zeltplanungszyklus mindestens eine der ersten, der zweiten, der weiteren zweiten und der dritten Zeltplanungseinheiten ($S^{N,N}$, $S^{M,N}$(i), $S^{N,M}$(j), $S^{M,M}$(i,j)) dafür ausgelegt ist, eine Bandbreitenanpassung unter Berücksichtigung sowohl einer vorläufig bewilligten Bandbreite (PFG(i,j), PFG(i,ii,j), PFG*(i,j,jj)) als auch einer endgültig bewilligten Bandbreite (FG(i,j), FG(i,ii,j), FG*(i,j,jj)) eines zuvor erfolgten Zeitplanungszyklus, und einer vorausbewilligten Bandbreite (PG(i,ii,j,jj)) des aktuellen Zeitplanungszyklus zwischen einer jeden der Eingangsebenen (I(0) bis I(M-1)) eines jeden der Verknüpfer (C(0) bis C(N-1)) und einer jeden der Ausgangsebenen (O(0) bis O(M-1)) eines jeden der Verteiler (D(0) bis D(N-1)) auszuführen.

6. Zeitplanungseinheit nach Anspruch 4, wobei die Zeitplanungseinheiten ($S^{N,N}$, $S^{M,N}$(i), $S^{N,M}$(j), $S^{M,M}$(i,j)) dafür ausgelegt sind, eine Bandbreitenanpassung durch Synchronisieren des Signalisierungsaustauschs einer vorausbewilligten Bandbreite (PG(i,ii,j,jj)), einer vorläufig bewilligten Bandbreite (PFG(i,j), PFG(i,ii,j), PFG*(i,j,jj)) und einer endgültig bewilligten Bandbreite FG(i,ii,j,jj) unter Verwendung eines gemeinsamen Taktsignals auszuführen.

7. Zeitplanungseinheit nach Anspruch 4, weiterhin umfassend einen Eingangszeitplaner (4a), welcher dafür ausgelegt ist, eine Bandbreitenanforderungsmatrix (R(i,ii,j,jj)) zu erzeugen, sowie einen Ausgangszeitplaner (5b), welcher dafür ausgelegt ist, die vorausbewilligte Bandbreite (PG(i,ii,j,jj)) aus der Bandbreitenanforderungsmatrix (R(i,ii,j,jj)) zu errechnen.

8. Knoten (2) eines Kommunikationsnetzwerks, umfassend:

Eine Vielzahl von Datenverknüpfern (C(0) bis C(N-1)), von denen ein jeder mit einer Gruppe von parallelen Eingangsebenen (I(0) bis I(M-1)) verbunden Ist,
eine Vielzahl von Datenverteilern (D(0) bis D(N-1)), von denen ein jeder mit einer Gruppe von parallelen Ausgangsebenen (O(0) bis O(M-1)) verbunden ist,
eine Zentralebene (6), welche mit der Vielzahl von Verknüpfern (C(0) bis C(N-1)) und Verteilern (D(0) bis D(N-1)) verbunden ist, und
eine Zeitplanungsvorrichtung gemäß Anspruch 4.

9. Knoten nach Anspruch 8, wobei die Datenverknüpfer (C(0) bis C(N-1)) Multiplexer zum Multiplexen der Daten aus der Gruppe von Eingangsebenen (I(0) bis I(M-1)) sind, und wobei die Datenverteiler (D(0) bis D(N-1)) Demultiplexer zum Demultiplexen der Daten in die Gruppe von Ausgangsebenen (O(0) bis O(M-1)) sind.

10. Kommunikationsnetzwerk (3), mindestens umfassend einen Knoten gemäß Anspruch 8.

**Revendications**

1. Procédé d'acheminement de données depuis des étages d'entrée parallèles (I(0) à I(M-1)) vers des étages de sortie parallèles (O(0) à O(M-1)) d'un noeud (2) d'un réseau de communications (3), dans lequel une pluralité de combineurs de données parallèles (C(0) à C(N-1)) sont chacun connectés à un groupe des étages d'entrée (I(0) à I(M-1)) et dans lequel une pluralité de distributeurs de données parallèles (D(0) à D(N-1)) sont chacun connectés à un groupe des étages de sortie (O(0) à O(M-1)), les combineurs (C(0) à C(N-1)) et les distributeurs (D(0) à D(N-1)) étant connectés à un étage central (6),
le procédé comprenant les étapes suivantes :

   a) mise en correspondance de la bande passante d'entrée de chacun des combineurs (C(0) à C(N-1 avec la bande passante de sortie de chacun des distributeurs (D(0) à D(N-1)), b1) pour chaque combineur (C(0) à C(N-1)), mise en correspondance de la bande passante d'entrée de chaque étage d'entrée (I(0) à I(M-1)) du groupe d'étages d'entrée (I(0) à I(M-1)) avec la bande passante de sortie de la pluralité de distributeurs (D(0) à D(N-1)) en utilisant le résultat de la mise en correspondance de la bande passante de l'étape a) comme contrainte, b2) pour chaque distributeur, (D(0) à D(N-1)), mise en correspondance de la bande passante de sortie de chaque étage de sortie (O(0) à O(M-1)) du groupe d'étages de sortie (O(0) à O(M-1)) avec la bande passante d'entrée de la pluralité de combineurs (C(0) à C(N-1)) en utilisant le résultat de la mise en correspondance de la bande passante de l'étape a) comme contrainte, et
   c) pour chaque paire de combineurs (C(0) à C(N-1)) et de distributeurs (D(0) à D(N-1)), mise en correspondance de la bande passante d'entrée de chaque étage d'entrée (I(0) à I(M-1)) du groupe d'étages d'entrée (I(0) à I(M-1)) avec la bande passante de sortie de chaque étage de sortie (O(0) à O(M-1)) du groupe d'étages de sortie (O(0) à O(M-1)) en utilisant le résultat de la mise en correspondance de la bande passante des étapes b1) et b2) comme contrainte.

2. Procédé selon la revendication 1, dans lequel dans au moins l'une des étapes a) à c), pour calculer une bande passante garantie finale (FG(i,iI,j,jj)) d'un cycle de planification actuel, la mise en correspondance de la bande passante est effectuée en prenant en compte à la fois une bande passante garantie préalable (PFG(i,j), PFG(i,ii,j), PFG*(i,j,jj)) et une bande passante garantie finale (FG(ij)). FG(i,ii,j), FG*(i,j,jj)) d'un cycle de planification précédent, et une bande passante pré-garantie (PG(i,ii,j,jj)) du cycle de planification actuel entre chacun des étages d'entrée (I(0) à I(M-1)) de chacun des combineurs (C(0) à C(N-1)) et chacun des étages de sortie (O(0) à O(M-1 de chacun des distributeurs (D(0) à D(N-1)).

3. Procédé selon la revendication 1, dans lequel dans les étapes a) à c), la mise en correspondance de la bande passante est effectuée en synchronisant l'échange de signalisation d'une bande passante pré-garantie (PG(i,ii,jjj)), d'une bande passante garantie préalable (PFG(i,j), PFG(i,ii,j), PFG*(ij,jj)) et d'une bande passante garantie finale (FG(i,ii,j,jj)) à l'aide d'un signal d'horloge commun.

4. Dispositif de planification (1) pour un noeud (2) d'un réseau de communications (3), le dispositif de planification comprenant :

   une première unité de planification ($s^{N.N}$) pour mettre en correspondance la bande passante d'entrée de chacun d'une pluralité de combineurs de données parallèles (C(0) à C(N-1)) du noeud (2) avec chacun d'une pluralité de distributeurs de données parallèles (D(0) à D(N-1)) du noeud (2),
   pour chaque combineur (C(0) à C(N-1)) connecté à un groupe d'étages d'entrée (I(0) à I(M-1)), une deuxième unité de planification ($s^{M.N}(i)$) pour mettre en correspondance la bande passante d'entrée de chaque étage d'entrée (I(0) à I(M-1)) du groupe d'étages d'entrée (I(0) à I(M-1)) avec la bande passante de sortie de la pluralité de distributeurs (D(0) à D(N-1)) en utilisant le résultat de la mise en correspondance de bande passante de la première unité de planification ($S^{N.N}$) comme contrainte,
   pour chaque distributeur (D(0) à D(N-1)) connecté à un groupe d'étages de sortie (O(0) à O(M-1)), une autre deuxième unité de planification ($S^{N.M}(j)$) pour mettre en correspondance la bande passante de sortie de chaque étage de sortie (O(0) à O(M-1)) du groupe d'étages de sortie (O(0) à O(M-1)) avec la bande passante d'entrée de la pluralité de combineurs (C(0) à C(N-1)) en utilisant le résultat de la mise en correspondance de la bande passante de la première unité de planification ($S^{N.N}$) comme contrainte, et pour chaque paire de combineurs (C(0) à C(N-1)) et de distributeurs (D(0) à D(N-1)), une troisième unité de planification ($S^{M.M}(i,j)$) pour mettre en correspondance la bande passante d'entrée de chaque étage d'entrée (I(0) à I(M-1)) du groupe d'étages d'entrée (I(0) à I(M-1)) avec la bande passante de sortie de chaque étage de sortie (O(0) à O(M-1)) du groupe d'étages de sortie (O(0) à O(M-1)) en utilisant les résultats de la mise en correspondance de la bande passante de la deuxième et de l'autre deuxième unités de planification ($S^{M.N}(i)$, $S^{N.M}(j)$) comme contrainte.

5. Dispositif de planification selon la revendication 4, dans lequel pour calculer une bande passante garantie finale (FG(i,ii,j,jj)) d'un cycle de planification actuel, au moins l'une des première, deuxième, autre deuxième et troisième unités de planification ($s^{N.N}$, $s^{N.N}(i)$, $s^{N.M}(j)$ $s^{M.M}(i,J)$) est conçue pour effectuer la mise en correspondance de la bande passante en prenant en compte à la fois une bande passante garantie préalable (PFG(i,j), PFG(i,ii), PFG*(i,j,jj)) et une bande passante garantie finale (FG(i,j), FG(i,i,j), FG*(i,j,jj)) d'un cycle de planification précédent, et une bande passante pré-garantie (PG(i,ii,j,jj)) du cycle de planification actuel entre chacun des étages d'entrée (I(0) à I(M-1)) de chacun des combineurs (C(0) à C(N-1)) et chacun des étages de sortie (O(0) à O(M-1)) de chacun des distributeurs (D(0) à D(N-1)).

6. Dispositif de planification selon la revendication 4, dans lequel les unités de planification ($s^{N.N}$, $s^{N.N}(i)$ $s^{N.M}(j)$ $s^{M.M}(i,j)$) sont conçues pour effectuer la mise en correspondance de la bande passante en synchronisant l'échange de signalisation d'une bande passante pré-garantie (PG(i,ii,jjj)), d'une bande passante garantie préalable (PFG(i,j), PFG(i,ii,j), PFG*(ij,jj)) et d'une bande passante garantie finale (FG(i,ii,j,jj)) à l'aide d'un signal d'horloge commun.

7. Dispositif de planification selon la revendication 4, comprenant en outre un planificateur d'entrée (4a) conçu pour générer une matrice de requête de bande passante (R(i,ii,j,jj)) et un planificateur de sortie (5b) conçu pour calculer la bande passante pré-garantie (PG(i,ii,jjj)) à partir de la matrice de requête de bande passante (R(i,ii,j,jj)).

8. Noeud (2) pour un réseau de communications, comprenant :

   une pluralité de combineurs de données (C(O) à C(N-1)), chacun connecté à un groupe d'étages d'entrée parallèles (I(0) à I(M-1)),
   une pluralité de distributeurs de données (D(O) à D(N-1)), chacun connecté à un groupe d'étages de sortie parallèles (O(0) à O(M-1)),
   un étage central (6) connecté à la pluralité de combineurs (C(O) à C(N-1)) et de distributeurs (D(O) à D(N-1)), et
   un dispositif de planification (1) selon la revendication 4.

9. Noeud selon la revendication 8, dans lequel les combineurs de données (C(O) à C(N-1)) sont des multiplexeurs pour multiplexer les données provenant du groupe d'étages d'entrée (I(0) à I(M-1)) et dans lequel les distributeurs de données (D(O) à D(N-1)) sont des démultiplexeurs pour démultiplexer les données vers le groupe d'étages de sortie (O(0) à O(M-1)).

10. Réseau de communications (3) comprenant au moins un noeud selon la revendication 8.

Fig. 1

Fig. 2

Fig. 3

**REFERENCES CITED IN THE DESCRIPTION**

**Patent documents cited in the description**

- WO 0038376 A
- US 20020110135 A
- US 6396843 B
- EP 1833212 A1